# EUROPEAN PATENT APPLICATION

(11) **EP 4 283 395 A1**
(43) Date of publication of application: **29.11.2023**
(21) Application number: 21920526.7
(22) Date of filing: 22.06.2021
(51) Int. Cl.: G03B 15/05, H05B 45/20, H05B 45/10

(54) **EXTERNAL FLASH, COLOR CORRECTION DETECTION DEVICE, AND COLOR CORRECTION SYSTEM FOR EXTERNAL FLASH**

(30) Priority: 22.01.2021 CN 202110089000; 22.01.2021 CN 202120202922 U
(71) Applicant: Yingyou Equipment Co., Ltd., Shenzhen, Guangdong 518000 (CN)
(72) Inventor: ZENG, Weiling, Shenzhen, Guangdong 518000 (CN)
(74) Representative: Studio Torta S.p.A.
(86) International application number: PCT/CN2021/101593
(87) International publication number: WO 2022/156145

(57) **Abstract**

An external flash (10), a color correction detection device (20), and a color correction system for the external flash (10). The external flash (10) comprises a light source assembly (11), a driver circuit (12), and a control circuit (13). The driver circuit (12) is configured to drive the light source assembly (11) to emit light; the control circuit (13) is electrically connected to the driver circuit (12), and the control circuit (13) is electrically connected to the color correction detection device (20); the control circuit (13) is configured to receive light-emitting information of the light source assembly (11) detected by the color correction detection device (20), and once color correction processing is performed according to the light-emitting information, generate color correction result information; and according to the color correction result information, the driver circuit (12) drives the light emission of the light source assembly (11) so as to achieve the light-emitting color correction of the light source assembly (11) of the external flash (10).

## Description

### FIELD OF TECHNOLOGY

The present application relates to the technical field of photographing-specific flash, and in particular, to an external flash, a color correction detection device, and a color correction system for the external flash.

### BACKGROUND

With the development of mobile communication technology, mobile terminals play an increasingly important role in people's life and work. Especially some mobile terminal devices with photographing functions, such as mobile phone, MP4, PDA, and notebook computer,can bring great fun to people's lives. Photographing requires light sources, and artificial light is often needed to assist in photographing besides natural light. An artificial light source of the mobile terminal with photographing functions often cannot meet the actual use requirements. Therefore, people often use an external flash to assist in photographing.

However, after long-term use of LED lamp beads in the external flash, there will be deviations in chroma and light-emitting intensity, resulting in the fact that actual light-emitting brightness, chroma, and other light-emitting parameters cannot reach preset light-emitting parameters so that the expected light filling effect cannot be realized.

The above information disclosed in the Background is only for the enhancement of understanding of the background of the present application and therefore it may include information that does not constitute prior art known to a person of ordinary skill in the art.

### SUMMARY

An object of the present application is to provide a color correction detection device, so as to implement color correction for an external flash.

To solve the above technical problems, the present application adopts the following technical solutions:
According to one aspect of the present application, an external flash is provided in the present application, including:
a light source assembly;
a driver circuit, configured to drive the light source assembly to emit light; and
a control circuit, electrically connected to the driver circuit, and the control circuit being configured to be electrically connected to a color correction detection device; where the control circuit is configured to receive light-emitting information of the light source assembly detected by the color correction detection device and perform color correction processing according to the light-emitting information, to generate color correction result information; and the driver circuit is configured to drive the light source assembly to emit light according to the color correction result information.

According to an embodiment of the present application, the control circuit includes a color correction processing circuit and a light-emitting control circuit; the light-emitting control circuit is electrically connected to the driver circuit, so as to control the driver circuit to operate; and
the color correction processing circuit is configured to be electrically connected to the color correction detection device, so as to receive the light-emitting information, generate the color correction result information, and send the color correction result information to the driver circuit.

According to an embodiment of the present application, the control circuit includes a color correction processing circuit and a light-emitting control circuit that are in electrical connection; the color correction processing circuit is configured to be connected to the color correction detection device, so as to receive the light-emitting information, perform color correction processing according to the light-emitting information and generate the color correction result information; and
the light-emitting control circuit is electrically connected to the color correction processing circuit, so as to receive the color correction result information, and the light-emitting control circuit controls the driver circuit to operate based on the color correction result information.

According to an embodiment of the present application, the light-emitting control circuit includes a programming terminal, and the programming terminal is electrically connected to the color correction processing circuit, and the programming terminal receives the color correction result information, so as to adjust a light-emitting control program in the light-emitting control circuit; and
the driver circuit drives the light source assembly to emit light according to the adjusted light-emitting control program.

According to an embodiment of the present application, the control circuit further includes a timing control circuit, and the timing control circuit is electrically connected to the driver circuit, so as to enable a driver power supply to drive the light source assembly to emit light at a preset timing; and
the timing control circuit is further electrically connected to the color correction detection device, so that when the light source assembly emits light at the preset timing, the timing control circuit controls the color correction detection device to detect the light-emitting information of the light source assembly at a preset timing accordingly.

According to an embodiment of the present application, the control circuit includes a timing reception terminal, and the timing reception terminal is configured to receive a timing control signal; and
the control circuit controls, according to the timing control signal, the driver circuit to operate, so as to control the light source assembly to emit light at a preset timing.

According to an embodiment of the present application, the external flash further includes a wireless communication circuit, and the wireless communication circuit is electrically connected to the control circuit; the wireless communication circuit is configured to communicate wirelessly with the color correction detection device, so as to receive, through wireless transmission, light-emitting information detected by the color correction detection device and transmit the light-emitting information to the control circuit.

According to an embodiment of the present application, the external flash further includes a communication interface, and the communication interface is electrically connected to the control circuit, and the communication interface is configured to electrically connected to the color correction detection device through a connection wire, so as to receive the light-emitting information detected by the color correction detection device.

According to an embodiment of the present application, the communication interface is a USB interface, and the USB interface is further used as a charging interface.

According to an embodiment of the present application, the color correction detection device further includes a display screen, and the display screen is electrically connected to the control circuit, so as to display a color correction control interface under the control of the control circuit.

A color correction detection device is further proposed in the present application, including:
a light-emitting information collection circuit, configured to collect light-emitting information of an external flash; and
a communication circuit, configured to communicate with the external flash, where the communication circuit is electrically connected to the light-emitting information collection circuit, so as to receive the light-emitting information and send the light-emitting information to the external flash.

According to an embodiment of the present application, the color correction device includes a main body and a light pick-up portion protruding from one side of the main body, and the light-emitting information collection circuit is located in the light pick-up portion.

According to an embodiment of the present application, the main body is detachably connected to the light pick-up portion.

According to an embodiment of the present application, the color correction detection device further includes a human-computer interaction assembly, and the human-computer interaction assembly is provided on the main body; and
the human-computer interaction assembly is electrically connected to the communication circuit, and the human-computer interaction assembly is used for one or more of receiving a color correction instruction, receiving a color correction setting parameter, switching a color correction mode, and transmitting the received instruction to the external flash through the communication circuit.

According to an embodiment of the present application, the human-computer interaction assembly includes one or more of a key reception assembly, a voice input assembly, a touch input assembly, and a gesture control assembly.

According to an embodiment of the present application, the color correction detection device further includes a display screen, and the display screen is provided on the main body; and
the display screen is configured to display a color correction control interface; and a displayed content of the color correction control interface includes one or more of color correction start/stop information, color correction parameter setting information, and color correction mode switching information.

According to an embodiment of the present application, the color correction detection device is a handheld device.

A color correction system for an external flash is further proposed in the present application, including an external flash and the color correction detection device,
wherein the color correction detection device is configured to collect light-emitting information of a light source assembly of the external flash, a control circuit of the external flash is electrically connected to the color correction detection device, so as to receive the light-emitting information of the light source assembly detected by the color correction detection device and perform, according to the light-emitting information, color correction processing to generate color correction result information; and a driver circuit drives, according to the color correction result information, the light source assembly to emit light.

A color correction system for an external flash is further proposed in the present application, including an external flash and a color correction detection device. The color correction detection device is configured to collect light-emitting information of a light source assembly of the external flash, a control circuit of the external flash is electrically connected to the color correction detection device, so as to receive the light-emitting information of the light source assembly detected by the color correction detection device and perform, according to the light-emitting information, color correction processing to generate color correction result information; and a driver circuit drives, according to the color correction result information, the light source assembly to emit light.

According to an embodiment of the present application, the color correction detection device further includes a display screen, and the display screen is configured to display a color correction control interface.

In the present application, the control circuit of the external flash can receive the light-emitting information of the light source assembly detected by the color correction detection device and perform color correction processing according to the light-emitting information, so as to generate color correction result information; and the driver circuit drives the light source assembly to emit light according to the color correction result information. Thus, the solutions of the present embodiment implement color correction of the light source assembly of the external flash.

It should be understood that the above general description and the following detailed description are exemplary and explanatory only and are not intended to limit the present application.

### BRIEF DESCRIPTION OF THE DRAWINGS

The above and other objects, features, and advantages of the present application will become more apparent by describing in detail exemplary embodiments thereof with reference to the drawings.
FIG. 1 shows a circuit structure block diagram of an external flash according to an example embodiment.
FIG. 2 shows a circuit structure block diagram of a color correction system for an external flash according to an example embodiment.
FIG. 3 shows a circuit structure block diagram of a color correction system for an external flash according to another example embodiment.
FIG. 4 shows a circuit structure block diagram of a color correction system for an external flash according to an example embodiment.
FIG. 5 shows a schematic structural block diagram of a color correction detection device according to an example embodiment.
FIG. 6 is a side view of FIG. 5.
FIG. 7 shows a circuit structure block diagram of a color correction detection device according to an example embodiment.

Illustrations of reference numerals: 10. external flash; 11. light source assembly; 12. driver circuit; 13. control circuit; 131. color correction processing circuit; 132. light-emitting control circuit; 14. timing control circuit; 15. wireless communication circuit; 20. color correction detection device; 21. light-emitting information collection circuit; 22. communication circuit; 201. main body; 202. light pick-up portion; 203. display screen; 204. key; and 205. switch key.

### DETAILED DESCRIPTION OF THE EMBODIMENTS

Although the present application can readily be embodied in different forms of embodiment, however, only some of the specific embodiments are shown in the drawings and will be described in detail in the description, while it is understood that the description is to be regarded as an exemplary illustration of the principles of the present application and is not intended to limit the present application to those described herein.

Thus, one feature pointed out in the description is intended to illustrate one of the features of one embodiment of the present application and is not intended to imply that each embodiment of the present application must have the illustrated feature. In addition, it should be noted that many features are described in the description. Although certain features may be combined to illustrate a possible system design, these features may also be used for other unspecified combinations. Therefore, unless otherwise stated, the illustrated combinations are not intended to be limiting.

In the embodiments illustrated in the drawings, indications of direction (such as up, down, left, right, front, and rear) are configured to explain that the structure and movement of the various elements of the present application are not absolute but relative. These descriptions are appropriate when these elements are in the positions shown in the drawings. If the description of the positions of these elements changes, the indications of these directions will also be changed accordingly.

The exemplary embodiments will now be described more fully with reference to the accompanying drawings. However, the example embodiments can be implemented in a variety of forms and should not be construed as being limited to the examples set forth herein. Rather, these embodiments are provided so that the present application will be more comprehensive and complete, and the concept of example embodiments will be fully communicated to those skilled in the art. The drawings are merely schematic illustrations of the present application and are not necessarily drawn to scale. Like reference numerals in the drawing denote identical or similar parts and thus repetitive descriptions thereof will be omitted.

The preferred embodiment of the present application is further elaborated below in conjunction with the drawings of the description.

In the present application, an external flash is first proposed for its own color correction. Color correction may refer to matching the actual light-emitting parameters of the external flash with the set light-emitting parameters, and color correction may also refer to adjusting the consistency of light-emitting parameters of each LED lamp bead in the external flash. The light-emitting parameters may include parameters such as brightness, color temperature, and saturation.

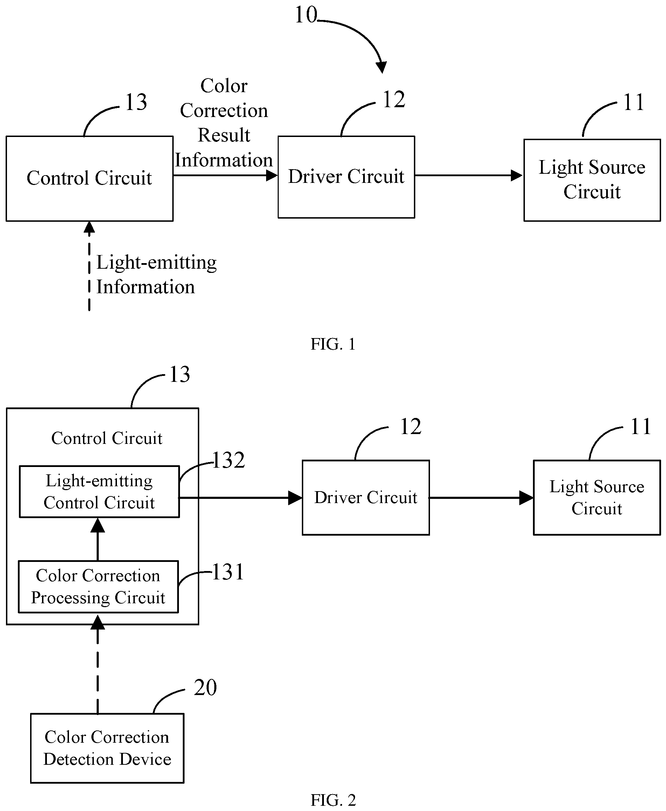

Please refer to FIG. 1 and FIG. 2. In an embodiment, an external flash 10 includes a light source assembly 11, a driver circuit 12, and a control circuit 13. The light source assembly 11 includes one or more LED light sources. The driver circuit 12 is configured to drive the light source assembly 11 to emit light. The control circuit 13 is electrically connected to the driver circuit 12, and the control circuit 13 is configured to be electrically connected to a color correction detection device 20, where the color correction detection device is configured to detect light-emitting information of the light source assembly. The control circuit 13 is configured to receive the light-emitting information of the light source assembly 11 from the color correction detection device 20 and perform color correction processing according to the light-emitting information, so as to generate color correction result information; and the driver circuit 12 is configured to drive the light source assembly 11 to emit light according to the color correction result information.

Here, the light-emitting information includes one or more pieces of information on brightness, chroma, saturation, etc. Here, all light beams emitted by the external flash 10 may be taken as a whole to collect one or more parameters such as brightness, chroma, and saturation. In another embodiment, in a case where a flash includes multiple LED light sources, the light-emitting information is one or more parameters of brightness, chroma, saturation, and the like of each LED light source. That is, in this embodiment, each LED light source is used as a minimum circuit to perform light-emitting correction on each LED in a targeted manner, so as to improve the accuracy of light-emitting correction. During the detection, each LED light source may be enabled to emit light independently, thereby obtaining the light-emitting information of the LED light source.

Here, the light-emitting information is collected by the color correction detection device 20, and the color correction detection device 20 may include a color pick-up circuit, a data conversion circuit, a filter circuit, etc. According to the target to be corrected, the color pick-up circuit may include various types of light sensors, such as brightness sensor, chroma sensor, and color temperature sensor. A housing of the color correction detection device is provided with a collection window, and the collection window is provided facing the light-emitting surface of the external flash 10, thus the color pick-up circuit can receive the light emitted by the external flash 10. Here, the light emitted by the external flash 10 may be picked up multiple times. Schematically, the external flash 10 is enabled to operate in various light-emitting modes and the light-emitting information in each mode is sampled. Here, the light-emitting modes include flashing mode, modeling light mode, constant lighting mode, etc. In each mode, the light-emitting information is picked up at least once. The data conversion circuit is configured to convert the analog quantity of the sampled light-emitting information into the corresponding digital quantity. The filter circuit is used for filtering an input or an output of the data conversion circuit to reduce noise interference.

The color correction detection device 20 may further include a data sorting circuit, which performs data sorting on the collected light-emitting information data. The specific data sorting method may be determined according to a color correction algorithm, and the collected light-emitting information may also be sorted one by one according to the position of the LEDs in the external flash 10. In this case, it is the light-emitting information sorting data that the control circuit 13 receives.

In another example, the data sorting circuit may also be provided within the control circuit 13, so that the control circuit 13 receives a digital quantity of the light-emitting information of the light emitted by the light source assembly 11 as collected by the color correction detection device 20.

In the present application, the control circuit 13 of the external flash 10 may receive the light-emitting information of the light source assembly 11 detected by the color correction detection device 20 and perform color correction processing according to the light-emitting information, so as to generate color correction result information; and the driver circuit 12 is configured to drive the light source assembly 11 to emit light according to the color correction result information. The solutions of the present application implement color correction of the light source assembly 11 of the external flash 10.

Moreover, in the solutions of the present application, the color correction processing is completed in the external flash 10, and the color correction result information obtained after completing the color correction may be quickly transmitted to the driver circuit 12, thus the speed of the color correction processing may be improved. In addition, since there is no need to place the circuit related to color correction processing in a color calibrator, which is conducive to realizing the miniaturization of the color calibrator, and it is convenient for a user to carry, so as to perform color correction on the external flash 10 at any time.

A color correction processing circuit 131 is provided in the control circuit 13, and a color correction processing algorithm may be stored in the color correction processing circuit 131, and the above sorted light-emitting data is logically calculated with the color correction processing algorithm, thus generating color correction result information. The color correction result information may be an adjustment program or a specific light-emitting correction value.

Schematically, in one example, the color correction processing circuit 131 includes a color correction chip, and the color correction chip is internally provided with a correction coefficient matrix. Based on the correction coefficient matrix, the above sort sampled data is calculated and processed to obtain color correction result information.

In another example, a preset parameter value is compared with the sampled light-emitting information sorting data to correct a driver current of the external flash 10. The external flash 10 driven by the corrected driver current can enable the actual light-emitting parameters of the flash to exactly match the set parameters.

Please continue to refer to FIG. 1. The control circuit 13 further includes a light-emitting control circuit 132, and the light-emitting control circuit 132 is electrically connected to the driver circuit 12 to control the operation of the driver circuit 12. During the normal operation process of the external flash 10, the light-emitting control circuit 132 generates a control signal to control the operation of the external flash 10.

In an embodiment, during the light-emitting correction process, the color correction processing circuit 131 is electrically connected to the color correction detection device 20, so as to receive the light-emitting information, generate color correction result information, and send the color correction result information to the driver circuit 12, so as to directly correct the light-emitting of the light source assembly 11 in real-time. This embodiment may be used in a debugging process of color correction.

In another embodiment, the color correction processing circuit 131 is electrically connected to the light-emitting control circuit 132, and the color correction processing circuit 131 is connected to the color correction detection device 20, so as to receive light-emitting information and generate the color correction result information. The light-emitting control circuit 132 is electrically connected to the color correction processing circuit 131, so as to receive the color correction result information, and the light-emitting control circuit 132 controls, based on the color correction result information, the driver circuit 12 to operate.

Schematically, the light-emitting information generated by the light-emitting control circuit may be a light-emitting compensation value. The light-emitting compensation value is sent to the light-emitting control circuit, so as to adjust the corresponding relationship between the light-emitting parameters and the driver circuit in the light-emitting control circuit, such as the corresponding relationship between brightness value and driver current, so as to adjust the driver current output by the driver circuit 12, thereby realizing the correction of the light-emitting of the light source assembly.

In another embodiment, the light-emitting control circuit 132 includes a programming terminal, and the programming terminal is electrically connected to the color correction processing circuit 131, and the programming terminal receives the color correction result information, so as to adjust a light-emitting control program in the light-emitting control circuit 132; and the driver circuit 12 is electrically connected to the light-emitting control circuit 132, so as to drive the light-emitting of the light source assembly 11 according to the adjusted light-emitting control program.

It should be understood that the arrangement of the programming terminal indicates that there is a programming module in the color correction processing circuit 131. The programming module may be in handshake communication with the light-emitting control circuit 132 and satisfy the relevant communication protocol, so as to smoothly program the program and adjust the original light-emitting control program and the driver current to the light source assembly 11, thus fundamentally correcting the deviation of the light-emitting effect of the external flash 10.

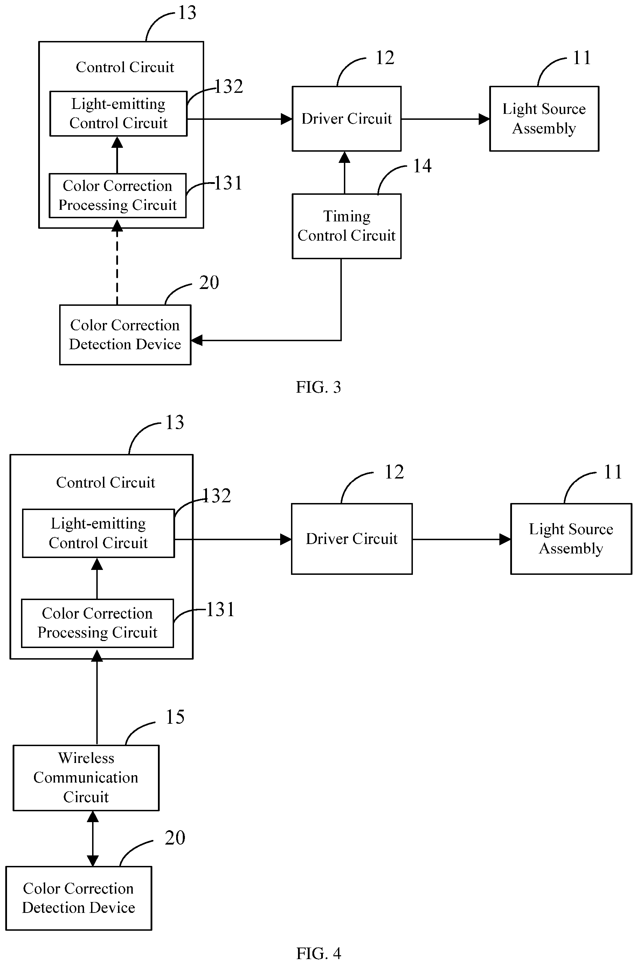

FIG. 4 shows a circuit structure block diagram of a color correction system for an external flash according to an example embodiment. In an embodiment, the external flash 10 further includes a wireless communication circuit 15, and the wireless communication circuit 15 may communicate wirelessly with the color correction detection device 20, so as to receive, through wireless transmission, light-emitting information detected by the color correction detection device 20 and transmit the light-emitting information to the control circuit 13. Specifically, the light-emitting information may be transmitted to the color correction processing circuit 131.

Here, the wireless communication circuit 15 may be built into the external flash 10 or external to the external flash 10, for example, an external USB wireless transmitter. The wireless communication circuit 15 may be a Bluetooth module, a WI-FI module, a Zig-Bee module, a broadcast module, etc. It should be understood that a wireless communication module connected to the wireless communication circuit 15 should be provided in the external flash 10.

This embodiment improves the convenience of communication between the color correction detection device 20 and the external flash 10. And the arrangement of the wireless communication circuit 15 can eliminate the need for providing interfaces on the color correction detection device 20 and the external flash 10. More importantly, the wireless communication circuit 15 can allow the distance between the color correction detection device 20 and the external flash 10 to be flexibly adjusted, so that different light-emitting information can be collected based on different distances, improving the accuracy of correction and the flexibility of the correction target. Here, the correction target may be provided as the correction of light-emitting parameters of the external flash 10 under different light-emitting distances.

In another embodiment, the external flash 10 further includes a communication interface, and the communication interface is electrically connected to the control circuit 13, and the communication interface is configured to be electrically connected to the color correction detection device 20 through a connection wire, so as to receive the light-emitting information detected by the color correction detection device 20.

Here, the communication interface is one of a USB interface, a TYPE C interface, an RS232 interface, and an RS485 interface. Here, there may be one or more communication interfaces.

FIG. 3 shows a circuit structure block diagram of a color correction system for an external flash according to another example embodiment. In an embodiment, the control circuit 13 further includes a timing control circuit 14, and the timing control circuit 14 is electrically connected to the driver circuit 12, so as to drive the light source assembly 11 to emit light at a preset timing; and the timing control circuit 14 is electrically connected to the color correction detection device 20, so that when the light source assembly 11 emits light at the preset timing, the timing control circuit 14 controls the color correction detection device 20 to detect the light-emitting information of the light source assembly 11 at the preset timing.

Here, the timing control circuit 14 is configured to send a timing control instruction, and the timing control instruction may include a light-emitting mode execution sequence, a light-emitting frequency, a brightness-changing timing, a color-changing timing, and the like of the light source assembly 11. The timing control circuit 14 may also control the color control detection circuit 20 to collect the light emitted by the light source assembly 11 in the preset timing, so that a collection timing is synchronized with the light-emitting timing, thus being able to determine the timing information corresponding to the collected light-emitting information and improve the accuracy of correction. In addition, this embodiment allows the color control detection circuit 20 not to collect data when the external flash 10 does not emit light, which is conducive to reducing noise interference of the color control detection circuit 20 and improving the accuracy of data sorting; and it is also conducive to energy conservation.

In another embodiment, in which the color correction detection device 20 may send a timing control instruction to control the whole color correction process. Specifically, the timing control circuit 14 is provided in the color correction detection device 20. At this time, the control circuit 13 includes a timing reception terminal, and the timing reception terminal is configured to receive a timing control signal through the wireless communication circuit 15 or the connection wire; and the control circuit 13 controls, according to the timing control signal, the driver circuit 12 to operate, thereby controlling the light source assembly 11 to emit light at a preset timing.

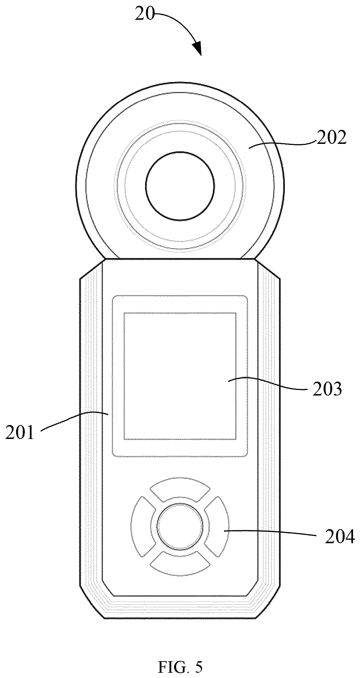

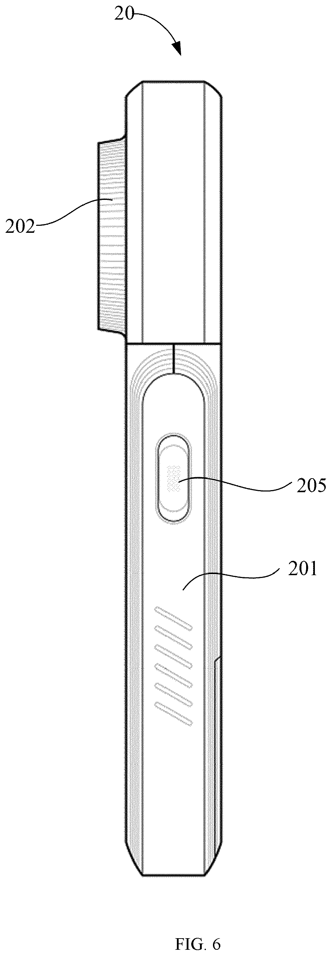

Referring to FIG. 5 and FIG. 6, in an embodiment, a color correction detection device 20 includes a main body 201 and a light pick-up portion 202 protruding from one side of the main body 201. Specifically, the main body 201 is roughly square, and an accommodating chamber is provided inside the main body to accommodate one or more circuit boards. It should be understood that relevant circuits of the present application may be partially or completely laid on the circuit board. A side surface of the main body 201 is further provided with a switch key 205, and when the switch key 205 is on, the color correction detection device 20 is turned on, and when the switch key 205 is off, the color correction detection device 20 is turned off. The light pick-up portion 202 is located on the upper side of the main body. Since the light radiation range of the external flash 10 is roughly circular, the light pick-up portion 202 provided in the present application is also roughly circular, so as to uniformly pick up a light beam emitted by the external flash 10. The color correction detection device 20 in the present application may be a handheld device, so as to facilitate a user to carry outdoors to perform color correction on the external flash at any time.

The main body 201 and the light pick-up portion 202 may be detachably connected. Specifically, the connection may be a snap-fit connection or a connection that is formed by cooperation between a chute slide chute and a sliding block, where the chute slide chute is provided on the main body 201, and the sliding block is provided on the light pick-up portion 202.

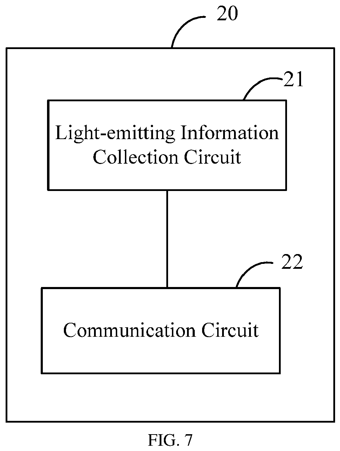

FIG. 7 shows a circuit structure block diagram of a color correction detection device 20 according to an example embodiment. In an embodiment, the color correction detection device 20 includes a light-emitting information collection circuit 21 and a communication circuit 22. The color correction detection device 21 is configured to collect the light-emitting information of the external flash 10; the communication circuit 22 is configured to communicate with the external flash 10; the communication circuit 22 is electrically connected to the light-emitting information collection circuit 21, so as to receive the light-emitting information and send the light-emitting information to the external flash.

In an embodiment, the light-emitting information collection circuit 21 may include a color pick-up circuit, a data conversion circuit, a filter circuit, etc. According to a target to be corrected, the color pick-up circuit may include various types of light sensors, such as brightness sensor, chroma sensor, and color temperature sensor. A collection window is provided on the housing of the color correction detection device, and the collection window is provided facing the light-emitting surface of the external flash 10, thus the color pick-up circuit can receive the light emitted by the external flash 10. Here, the light emitted by the external flash 10 may be picked up multiple times. Schematically, the external flash 10 is enabled to operate in various light-emitting modes and the light-emitting information in each mode is sampled. Here, the light-emitting modes include flashing mode, modeling light mode, constant lighting mode, etc. In each mode, the light-emitting information is picked up at least once. The data conversion circuit isconfigured to convert the analog quantity of the sampled light-emitting information into the corresponding digital quantity. The filter circuit is used for filtering an input or an output of the data conversion circuit to reduce noise interference.

The communication circuit 22 may include a wireless transmission module, such as a Wi-Fi module, a Bluetooth module, etc., and the communication circuit 22 may also include a communication interface, such as a USB interface. The color correction detection device 20 in the present application may be a handheld device, so as to facilitate the user to carry outdoors to perform light-emitting information collection on the external flash 10 at any time.

Please refer to FIG. 5 and FIG. 6, in an embodiment, the color correction detection device 20 further includes a human-computer interaction assembly, and the human-computer interaction assembly is provided on the main body. The human-computer interaction assembly is electrically connected to the communication circuit 22, and the human-computer interaction assembly is used for one or more of receiving a color correction instruction, receiving a color correction setting parameter, switching a color correction mode switching, and transmitting the received instruction to the external flash 10 through the communication circuit 22.

In an example, the human-computer interaction assembly may be a touch-control screen assembly, a key assembly, a voice input assembly, and the like for the user to input color correction relevant instructions. When the user sends a color correction instruction, the light-emitting information collection circuit 21 starts to collect light-emitting information, and then the control circuit 13 starts data processing. The received color correction setting parameters include a color correction accuracy parameter, a color correction target parameter, etc. The color correction mode may include a brightness correction mode, a chroma correction mode, a saturation correction mode, and a comprehensive correction mode (simultaneously correcting brightness, chroma, saturation, etc.). In a specific embodiment, the human-computer interaction assembly includes a plurality of keys 204. The user presses the key 204 to send a color correction instruction, set a color correction parameter, and switch color correction modes.

In an embodiment, further, the color correction detection device 20 further includes a display screen 203, and the display screen 203 is electrically connected to the control circuit 13, so as to display a color correction control interface under the control of the control circuit 13. At this point, the external flash 10 is in total control of the whole color correction process. A color correction application software may be stored in the control circuit 13 (specifically, may be in the color correction control circuit 13), and when the color correction application software is running, a color correction control interface may be displayed on a display screen 203. The color correction control interface includes multiple controls for the user to send a color correction control instruction, set a color correction parameter, select a color correction mode, etc.; and a timing control instruction is generated according to the color correction control instruction sent by the user, so as to simultaneously control the operations of the light source assembly 11 and the color correction detection device 20. The color correction control interface may further include a display window to display the color correction progress. This embodiment improves the intelligence of the color correction detection device 20, improves the human-computer interaction ability, and makes it convenient for the user to correct different parameters of the external flash 10 according to the user's needs, and correct these parameters to target parameters that meet the user's requirements.

Please refer to FIG. 2, FIG. 3, and FIG. 4. In another aspect of the present application, a color correction system for an external flash is further proposed, and the color correction system includes the external flash 10 and the color correction detection device 20 in the above embodiments. The color correction detection device 20 and the external flash 10 may transmit data and instructions in a wired or wireless manner. The color correction system realizes the light-emitting correction of the external flash 10.

The "circuit" mentioned in the above embodiments, such as the driver circuit 12, the color correction processing circuit 131, the communication circuit 22, the programming circuit, the timing control circuit 14, the light-emitting control circuit 132, and the display circuit, can be built by adopting physical circuits or specific chips.

Moreover, the above light-emitting information and color correction result information only represent the substantial meaning of the signal. In fact, in the process of signal transmission, the form will change. For example, the conversion of the analog quantity and the digital quantity, transmission in the form of a single signal or packaging into data packets, etc., are not specifically limited herein.

While the present application has been described with reference to several exemplary embodiments, it should be understood that the terms used herein are illustrative and exemplary and are not limiting. Since the present application can be embodied in various forms without departing from the spirit or essence of the invention, it should therefore be understood that the foregoing embodiments are not limited to any of the foregoing details, but should be construed broadly within the spirit and scope of the appended claims, so that all variations and modifications falling within the scope of the claims or their equivalents are to be covered by the appended claims.

## Claims

1. An external flash, comprising:
a light source assembly;
a driver circuit configured to drive the light source assembly to emit light; anda control circuit electrically connected to the driver circuit, and the control circuit being configured to be electrically connected to a color correction detection device, wherein the color correction detection device is configured to detect light-emitting information of the light source assembly;
wherein the control circuit is configured to receive the light-emitting information of the light source assembly from the color correction detection device and perform color correction processing according to the light-emitting information, so as to generate color correction result information; and the driver circuit is configured to drive the light source assembly to emit light according to the color correction result information.

2. The external flash according to claim 1, wherein the control circuit further comprises a color correction processing circuit and a light-emitting control circuit, wherein the light-emitting control circuit is electrically connected to the driver circuit, so as to control the driver circuit to operate; and
wherein the color correction processing circuit is configured to be electrically connected to the color correction detection device, so as to receive the light-emitting information, generate the color correction result information, and send the color correction result information to the driver circuit.

3. The external flash according to claim 1, wherein the control circuit comprises a color correction processing circuit and a light-emitting control circuit that are in electrical connection, wherein the color correction processing circuit is configured to be connected to the color correction detection device, so as to receive the light-emitting information, perform color correction processing according to the light-emitting information and generate the color correction result information; and
wherein the light-emitting control circuit is electrically connected to the color correction processing circuit, so as to receive the color correction result information, and the light-emitting control circuit controls the driver circuit to operate based on the color correction result information.

4. The external flash according to claim 3, wherein the light-emitting control circuit comprises a programming terminal, and the programming terminal is electrically connected to the color correction processing circuit, and the programming terminal receives the color correction result information, so as to adjust a light-emitting control program in the light-emitting control circuit; and
wherein the driver circuit drives the light source assembly to emit light according to the adjusted light-emitting control program.

5. The external flash according to claim 1, wherein the control circuit further comprises a timing control circuit, and the timing control circuit is electrically connected to the driver circuit, so as to enable a driver power supply to drive the light source assembly to emit light at a preset timing; and
wherein the timing control circuit is further electrically connected to the color correction detection device, so that when the light source assembly emits light at the preset timing, the timing control circuit controls the color correction detection device to detect the light-emitting information of the light source assembly at a preset timing accordingly.

6. The external flash according to claim 1, wherein the control circuit comprises a timing reception terminal, and the timing reception terminal is configured to receive a timing control signal; and
wherein the control circuit controls, according to the timing control signal, the driver circuit to operate, so as to control the light source assembly to emit light at a preset timing.

7. The external flash according to claim 1, wherein the external flash further comprises a wireless communication circuit, and the wireless communication circuit is electrically connected to the control circuit, wherein the wireless communication circuit is configured to communicate wirelessly with the color correction detection device, so as to receive, through wireless transmission, light-emitting information detected by the color correction detection device and transmit the light-emitting information to the control circuit.

8. The external flash according to claim 1, wherein the external flash further comprises a communication interface, and the communication interface is electrically connected to the control circuit, and the communication interface is configured to electrically connected to the color correction detection device through a connection wire, so as to receive the light-emitting information detected by the color correction detection device.

9. The external flash according to claim 8, wherein the communication interface is a USB interface, and the USB interface is further used as a charging interface.

10. A color correction detection device, comprising:
a light-emitting information collection circuit configured to collect light-emitting information of an external flash; and
a communication circuit configured to communicate with the external flash, wherein the communication circuit is electrically connected to the light-emitting information collection circuit, so as to receive the light-emitting information and send the light-emitting information to the external flash.

11. The color correction detection device according to claim 10, wherein the color correction device comprises a main body and a light pick-up portion protruding from one side of the main body, and the light-emitting information collection circuit is located in the light pick-up portion.

12. The color correction detection device according to claim 11, wherein the main body is detachably connected to the light pick-up portion.

13. The color correction detection device according to claim 11, wherein the color correction detection device further comprises a human-computer interaction assembly, and the human-computer interaction assembly is provided on the main body; and
wherein the human-computer interaction assembly is electrically connected to the communication circuit, and the human-computer interaction assembly is used for one or more of receiving a color correction instruction, receiving a color correction setting parameter, switching a color correction mode, and transmitting the received instruction to the external flash through the communication circuit.

14. The color correction detection device according to claim 13, wherein the human-computer interaction assembly comprises one or more of a key reception assembly, a voice input assembly, a touch input assembly, and a gesture control assembly.

15. The color correction detection device according to claim 11, wherein the color correction detection device further comprises a display screen, and the display screen is provided on the main body; and
wherein the display screen is configured to display a color correction control interface; and a displayed content of the color correction control interface comprises one or more of color correction start/stop information, color correction parameter setting information, and color correction mode switching information.

16. The color correction detection device according to claim 10, wherein the color correction detection device is a handheld device.

17. A color correction system for an external flash, comprising the external flash according to any one of claims 1 to 9 and the color correction detection device according to any one of claims 10 to 16;
wherein the color correction detection device is configured to collect light-emitting information of a light source assembly of the external flash, a control circuit of the external flash is electrically connected to the color correction detection device, so as to receive the light-emitting information of the light source assembly detected by the color correction detection device and perform, according to the light-emitting information, color correction processing to generate color correction result information; and wherein a driver circuit of the external flash drives, according to the color correction result information, the light source assembly to emit light.
